# EUROPEAN PATENT APPLICATION

(11) **EP 3 424 576 A1**
(43) Date of publication of application: **09.01.2019**
(21) Application number: 17208829.6
(22) Date of filing: 20.12.2017
(51) Int. Cl.: A63H 30/04, A63F 7/06

(54) **BALL HITTING DEVICE**

(30) Priority: 07.07.2017 JP 2017134087
(71) Applicant: Tomy Company, Ltd., Katsushika-ku Tokyo 124-8511 (JP)
(72) Inventor: KAWASAKI, Akimitsu, Katsushika-ku, Tokyo 124-8511 (JP); NAGAI, Tomohito, Shibuya-ku, Tokyo 151-0051 (JP)
(74) Representative: Bates, Philip Ian

(57) **Abstract**

A ball hitting device, including: a ball; a device body which includes a drive device that causes the device body to at least move forward and turn and a hitting device that hits the ball forward; and an external controller which operates the drive device and the hitting device from outside, wherein the device body is provided with ball holding pieces on respective left and right sides of a hitting section of the hitting device, the ball holding pieces extending in front of the device body, and the ball is freely movable between the left and right ball holding pieces.

## Description

### BACKGROUND OF THE INVENTION

### 1. Field of the Invention

The present invention relates to a ball hitting device.

### 2. Description of Related Art

There have been conventionally known ball hitting devices each of which includes a device body provided with a driving device, a guide means that guides a spherical object and a hitting means (hitting section) that hits the spherical object (for example, see Japanese Patent Application Laid Open Publication No. 2001-38039).

The guide means of the ball hitting device includes a pair of arm members which is openable and closable by the driving device. When the pair of arm members is closed, lateral sides of the spherical object can be guided. When the pair of arm members is opened, the spherical object is released.

Since the ball hitting device is configured to once close the pair of arm members and guide the lateral sides of the spherical object, the ball hitting device is not suitable for scramble for a ball. Accordingly, it has not been possible to achieve a situation such as scramble for a ball as performed in soccer games.

### SUMMARY OF THE INVENTION

The present invention has been made in consideration of the above matters, and an object of the present invention is to provide a ball hitting device which is capable of holding a ball and scrambling for the ball even after the ball is held.

In order to achieve at least one of the above objects, according to one aspect of the present invention, there is provided a ball hitting device, including: a ball; a device body which includes a drive device that causes the device body to at least move forward and turn and a hitting device that hits the ball forward; and an external controller which operates the drive device and the hitting device from outside, wherein the device body is provided with ball holding pieces on respective left and right sides of a hitting section of the hitting device, the ball holding pieces extending in front of the device body, and the ball is freely movable between the left and right ball holding pieces.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a perspective view showing a device body of a ball hitting device in an embodiment;
FIG. 2 is a front perspective view showing an external controller of the ball hitting device in the embodiment;
FIG. 3 is a rear upward perspective view showing the external controller of the ball hitting device in the embodiment;
FIG. 4 is a rear perspective view showing an internal configuration of the device body of the ball hitting device in the embodiment;
FIG. 5 is a perspective view showing an attachment configuration of ball holding pieces to the device body of the ball hitting device in the embodiment;
FIG. 6 is a lateral view of the device body of the ball hitting device in the embodiment;
FIG. 7 is a perspective view showing a leg drive device of the device body of the ball hitting device in the embodiment;
FIG. 8 is a perspective view showing a part of the leg drive device of the device body of the ball hitting device in the embodiment;
FIG. 9 is a perspective view showing a part of the leg drive device of the device body of the ball hitting device in the embodiment;
FIG. 10 is an overall perspective view excluding a part of the device body of the ball hitting device in the embodiment;
FIG. 11 is a perspective view showing a wheel drive device of the device body of the ball hitting device in the embodiment;
FIG. 12 is a block diagram showing a control configuration of the external controller of the ball hitting device in the embodiment;
FIG. 13 is a block diagram showing a control configuration of the device body of the ball hitting device in the embodiment;
FIGS. 14A and 14B are plan views each of which shows the device body of the ball hitting device holding a ball in the embodiment; and
FIG. 15 is a plan view showing device bodies of ball hitting devices scrambling for a ball in the embodiment.

### DETAILED DESCRIPTION OF THE PREFERRED EMBODIMENT

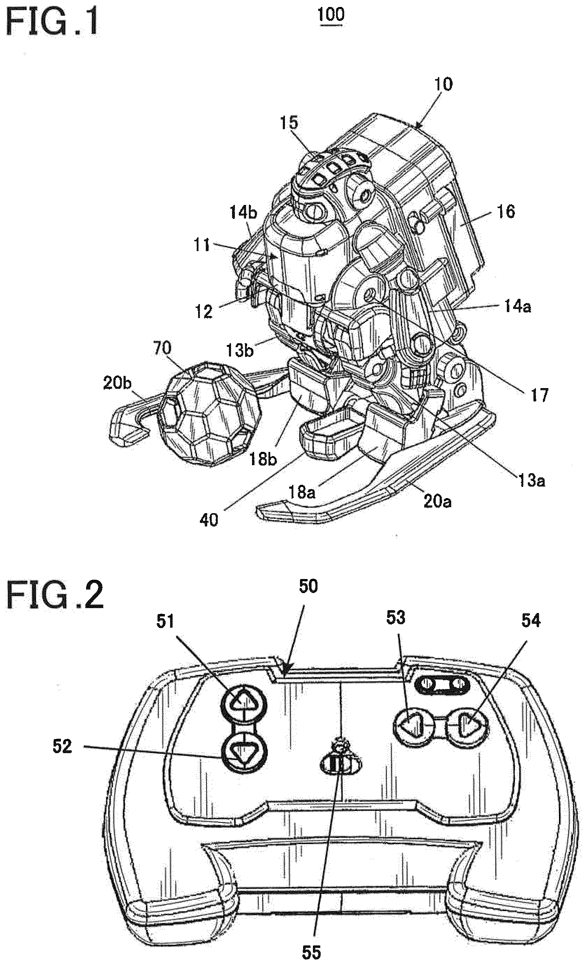

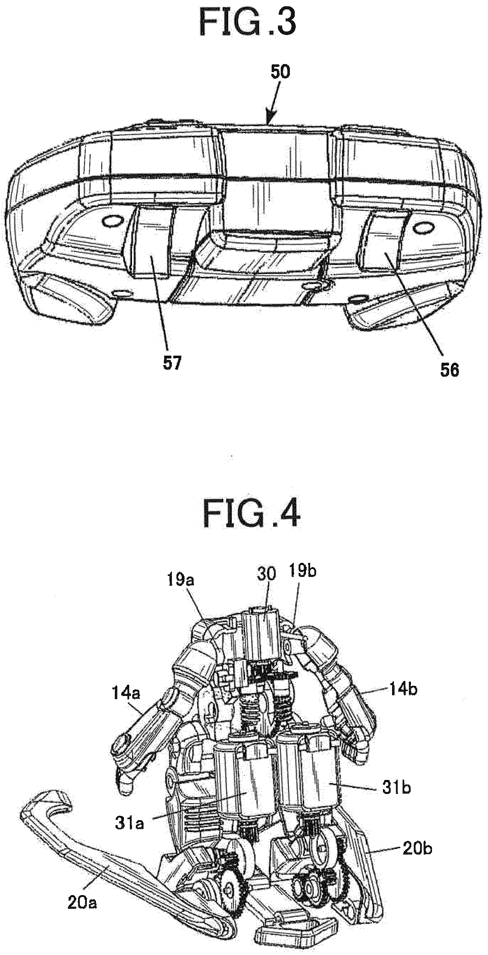

FIG. 1 is a perspective view showing a device body of a ball hitting device. Each of FIGS. 2 and 3 is a perspective view showing an external controller of the ball hitting device.

A ball hitting device 100 includes a device body 10 and an external controller 50.

### (1) External controller 50

The external controller 50 has a size such that a player can hold both left and right sides with hands to operate. In the description of the external controller 50, the front, rear, left and right indicate those as viewed from the player.

The external controller 50 is provided with a forward button 51 at the rear left and a backward button 52 at the front left on the upper surface. The external controller 50 is also provided with a left turn button 53 at the inner right and a right turn button 54 at the outer right on the upper surface. The external controller 50 is further provided with a power switch 55 at the front center in the horizontal direction.

FIG. 3 is a rear upward perspective view showing the external controller.

The external controller 50 is provided with a left leg shooting lever 56 at the left and a right leg shooting lever 57 at the right on the lower surface.

In the ball hitting device 100, when the forward button 51 of the external controller 50 is pressed, the device body 10 moves forward. When the backward button 52 is pressed, the device body 10 moves backward. When the left turn button 53 is pressed, the device body 10 turns to the left. When the right turn button 54 is pressed, the device body 10 turns to the right. In this case, when only the left turn button 53 is pressed, the device body 10 slowly turns to the left at the current position. When only the right turn button 54 is pressed, the device body 10 slowly turns to the right at the current position. On the other hand, when the left turn button 53 and the forward button 51 are pressed together, the device body 10 turns to the left relatively quickly while moving forward. When the right turn button 54 and the forward button 51 are pressed together, the device body 10 turns to the right relatively quickly while moving forward. The same also applies when the backward button 52 is pressed.

When the left leg shooting lever 56 is operated, the device body 10 performs a kicking motion with the left leg. When the right leg shooting lever 57 is operated, the device body 10 performs a kicking motion with the right leg. By the kicking motion, the ball 70 is hit in a predetermined direction. In the description of the device body 10, the front, rear, left and right indicate those as viewed from the player who operates the device body 10.

### (2) Ball 70

The ball 70 is a plastic polyhedron and formed to be spherical as a whole. The inside of the ball 70 is a hollow section. Specifically, the outer shape of the ball 70 is formed to be spherical by combining a pentagon plate and a hexagon plate . The ball 70 is provided with holes in places, the holes being communicated with the hollow section. The ball 70 is formed in a polyhedron since the polyhedron has flat surfaces and thus the ball 70 does not roll easily and can be controlled easily compared to a completely spherical ball.

### (3) Appearance of device body 10

Returning to FIG. 1, the device body 10 includes a device main body 11 and accessories. The device main body 11 includes a torso 12, left and right legs 13a and 13b, left and right arms 14a and 14b and a head 15.

A box 16 of a backpack type is provided on the back of the torso 12. The box 16 can contain three AAA batteries longitudinally. An electronic substrate (not shown in the drawings) is disposed behind the battery containing section in the box 16. The electronic substrate is mounted with electronic components, electrical components and such like necessary for operating the device body 10.

The left and right legs 13a and 13b are provided on the bottom of the torso 12. The left and right legs 13a and 13b are formed so as to be rotatable independently from each other about a common shaft 17 which is located on the bases of the legs. Detachable shoes 18a and 18b are provided on the lower ends of the left and right legs 13a and 13b. The front surfaces of the shoes 18a and 18b are inclined so as to easily raise the ball 70 when kicking the ball 70.

The left and right arms 14a and 14b are provided on the sides of the torso 12. As shown in FIG. 4, the left and right arms 14a and 14b are configured to be rotatable independently from each other about respective shafts 19a and 19b located on the bases of the arms. The left and right arms 14a and 14b swing in accordance with the operation of the device body 10.

In addition, a head 15 is provided on the torso 12.

The device main body 11 is provided with a ball holding piece 20a on the left of the left leg 13a and a ball holding piece 20b on the right of the right leg 13b, the ball holding piece 20a extending forward and having the inward curved distal end, and the ball holding piece 20b extending forward and having the inward curved distal end. The left and right ball holding pieces 20a and 20b are detachably attached to respective attachments in the device main body 11.

Since the left and right ball holding pieces 20a and 20b are nearly horizontally plane-symmetrical, the left and right ball holding pieces 20a and 20b will be collectively described.

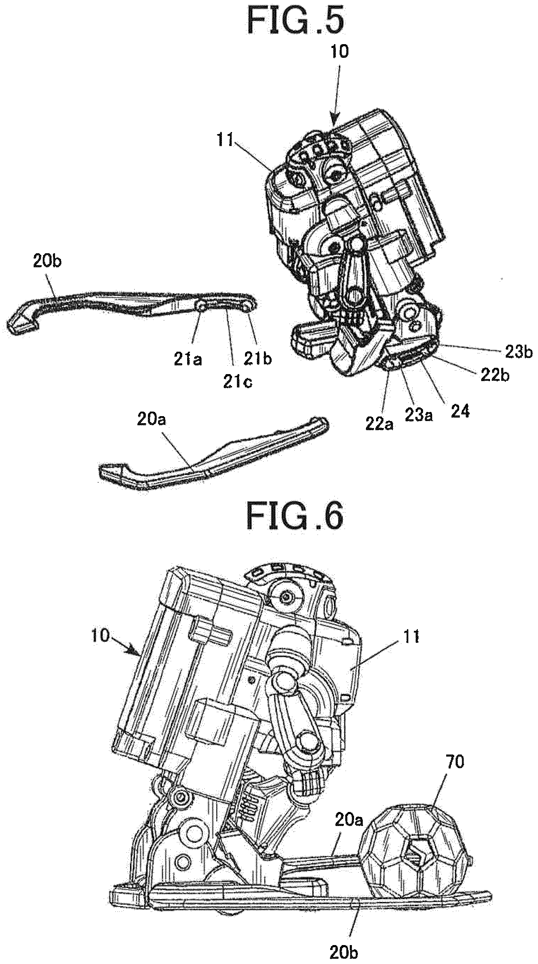

As shown in FIG. 5, the inner edge of the base end of the ball holding piece 20a (or ball holding piece 20b) is curved so as to be concave on the inner side in a planer view. The curved portion is provided with two protrusions 21a and 21b which are distant by a predetermined distance in the front-back direction. The two protrusions 21a and 21b are connected via an elongated convex 21c. The two protrusions 21a and 21b and the elongated convex 21c are formed to be an iron dumbbell shape as a whole.

On the other hand, the outer edge of the attachment of the device main body 11 is curved so as to be convex outward in a planer view. A first pair of holes 22a and 22b and a second pair of holes 23a and 23b are provided on the outer edge of the attachment. The two holes 22a and 22b are formed to be distant by a predetermined distance in the front-back direction, and the two holes 23a and 23b are also formed to be distant by the same distance in the front-back direction. The first pair of holes 22a and 22b and the second pair of holes 23a and 23b are formed to be shifted from each other in the front-back direction so that the front holes of the respective pairs partially overlap each other and the back holes of the respective pairs partially overlap each other. The front holes 22a and 23a are connected to the back holes 22b and 23b via a slit 24.

The protrusions 21a and 21b selectively fit into the first pair of holes 22a and 22b or the second pair of holes 23a and 23b. At this time, the elongated convex 21c fits into the slit 24. In this case, since the attachment of the device main body 11 to attach the ball holding piece 20 is curved, the direction and the protruding amount of the ball holding piece 20 are changed according to whether the protrusions 21a and 21b fit into the first pair of holes 22a and 22b or the second pair of holes 23a and 23b. For example, in a case where the protrusions 21a and 21b fit into the first pair of holes 22a and 22b which are located on the front side with respect to the second pair of holes 23a and 23b, the distal end of the ball holding piece 20 is located more inward in the width direction of the device main body 11 and the protruding amount is increased. In this way, the opening degree and the protruding amounts of the left and right ball holding pieces 20a and 20b can be adjusted and the holding force of the ball 70 and such like can be changed.

The distal end of the ball holding piece 20a (or ball holding piece 20b) forms a ball holding section. The ball holding section is curved so that the inner edge is concave, and the distal end is curved inward in the width direction of the device main body 11. Here, as shown in FIG. 5, in the ball holding piece 20a, the ball holding section is offset higher than the extended line of the line connecting the protrusions 21a and 21b. On the other hand, in the ball holding piece 20b, the ball holding section is offset lower than the extended line of the line connecting the protrusions 21a and 21b.

As a result, as shown in FIG. 6, when the ball holding piece 20a is attached to the left attachment of the device main body 11, the ball holding section of the ball holding piece 20a is held at a position floating above the floor (referred to as an upper position of the ball holding piece). When the ball holding piece 20b is attached to the right attachment of the device main body 11, the ball holding section of the ball holding piece 20b is held at a position contacting the floor (referred to as a lower position of the ball holding piece).

In a state in which the ball holding piece 20a is located at the upper position, the ball holding piece 20b of the opponent located at the lower position can crawl under the ball holding piece 20a. Accordingly, scramble for the ball 70 can be performed with the device body 10 of the opponent.

When the ball holding piece 20a (or ball holding piece 20b) is used upside down, the ball holding piece 20a (or ball holding piece 20b) can be attached to the attachment on the opposite side in the horizontal direction. At this time, the upper/lower position of the ball holding piece 20a (or ball holding piece 20b) is changed.

The holding force of the ball 70 is large when the ball holding section of the ball holding piece 20a (or ball holding piece 20b) is floating above the floor, and the holding force of the ball 70 is small when the ball holding section is in contact with the floor. It is preferable that the thickness (height) of the ball holding pieces 20a and 20b, especially, the thickness (height) of the ball holding sections is less than a quarter of the diameter of the ball 70. By this configuration, the ball 70 can be scraped out even when the ball holding pieces 20a and 20b vertically overlap each other during scramble for the ball 70. It is preferable to have a configuration that the held ball 70 can move freely between the ball holding pieces 20a and 20b. It is preferable that the distance between the ball holding piece 20a and the ball holding piece 20b is 1.5 times or more the diameter of the ball 70 or twice or more the diameter of the ball 70. By this configuration, the ball 70 can freely move largely, and thus, the dribbling image can be effectively expressed.

A ball shifting member 40 for shifting the ball 70 to left or right is provided so as to protrude forward between the left and right legs 13a and 13b. The front end of the ball shifting member 40 has a chevron shape to shift the ball 70 to the left or the right. The ball 70 is led in front of the left and right legs 13a and 13b by cooperation between the ball shifting member 40 and the ball holding pieces 20a and 20b.

### (4) Internal mechanism

As shown in FIG. 4, the device body 10 is mounted with three motors 30, 31a and 31b. The motor 30 mounted near the head 15 is capable of both forward and backward rotations, and operates the left and right legs 13a and 13b. The motors 31a and 31b mounted on the left and right of the torso 12 operate the left and right wheels 38a and 38b. The left leg 13a or the right leg 13b performs a kicking motion according to whether the rotation of the motor 30 is forward or backward.

First, power transmission mechanism between the motor 30 and the left and right legs 13a and 13b will be described. Since the left and right power transmission mechanisms are horizontally nearly plane-symmetrical, the description will be collectively described.

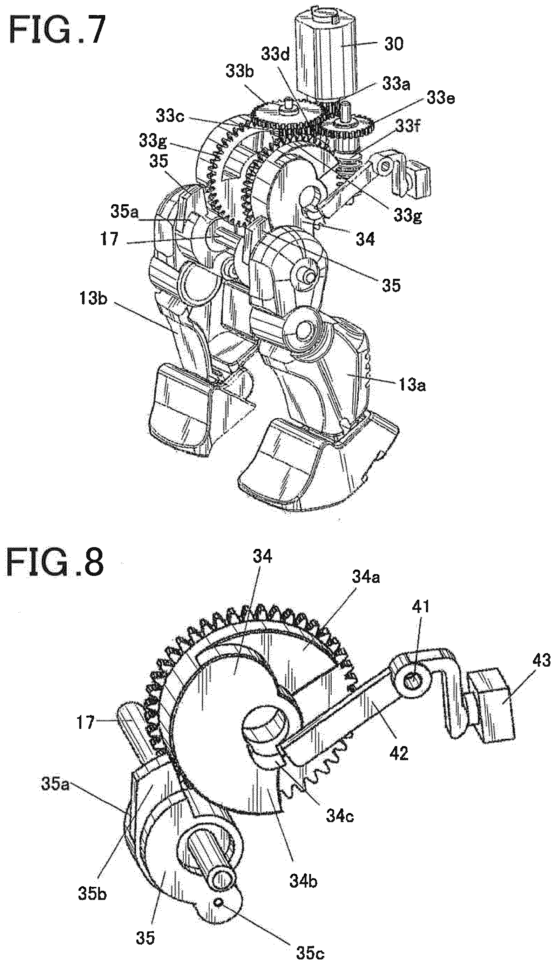

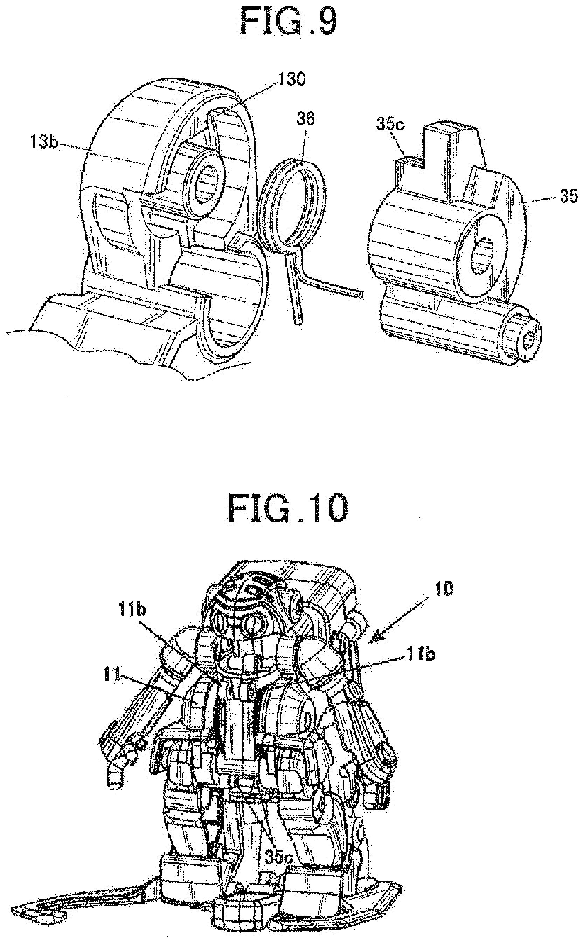

As shown in FIG. 7, the motor 30 is provided upright, and a gear 33a is provided to an output axis of the motor 30. The power of the gear 33a is transmitted to cams 34 via gears 33b, 33c, 33d, 33e, 33f and 33g. Each of the gears 33a, 33b, 33c and 33d is shared between the left and right components . A pair of each of the left and right gears 33e, 33f and 33g and a pair of left and right cams 34 are also provided. The gears 33f are screw gears. A one-way clutch (not shown in the drawings) is mounted in the power transmission mechanism, and each of the cams 34 rotates in only one direction. The cam 34 is a two-stage cam. That is, the cam 34 is configured by including a first cam 34a and a second cam 34b which are formed coaxially. Each of the first cam 34a and the second cam 34b is a plate cam. A lever 35 as a follower is provided adjacent to the first cam 34a located on the inner side in the width direction of the device body 10 and the second cam 34b located on the outer side in the width direction of the device body 10. The lever 35 is provided for each of the left and right components. The lever 35 rotates about the intermediate axis 17. The lever 35 includes, on one end, a first abutting section 35a which abuts on the first cam 34a by rotation of the cam 34 and a second abutting section 35b which abuts on the second cam 34b by rotation of the cam 34. The lever 35 is connected to a base of the leg 13a (or leg 13b) via a one-way clutch (not shown in the drawings) . That is, as shown in FIG. 9, the lever 35 fits to the base of the leg 13a (or leg 13b), and a protrusion 35c of the lever 35 sticks to a stepped section 130a of the leg 13a (or leg 13b) via a torsion spring 36 at the above fitting section. The protrusion 35c of the lever 35 and the stepped section 130a of the leg 13a (or leg 13b) can relatively rotate by 90 degrees against the biasing force of the torsion spring 36.

When the cam 34 rotates, first, the first cam 34a abuts on the first abutting section 35a, and the leg 13a (or leg 13b) is pulled back. Thereafter, the second cam 34b abuts on the second abutting section 35b, the leg 13a (or leg 13b) is further pulled back and this state is maintained. When the cam 34 further rotates, the abutment between the cam 34 and the lever 35 is released, and the leg 13a (or leg 13b) is thrown forward by the action of a spring (not shown in the drawings).

As shown in FIG. 10, the spring in this case (not shown in the drawings) is hung between a spring hanging section 35c of the lever 35 and a spring hanging section 11b of the torso 12. As shown in FIG. 8, there is provided a lever 42 which rotates about the shaft 41 by the protrusion 34c provided on the end surface of the cam 34. A positioning switch 43 is activated by the operation of the lever 42, and positioning of the cam 34 is performed. The response is improved by this positioning.

These sections for operating the left and right legs 13a and 13b form a hitting device.

The power transmission mechanism between the motors 31a and 31b and the left and right wheels 38a and 38b will be described. Since the left and right power transmission mechanisms are horizontally nearly plane-symmetrical to each other, the description will be collectively made.

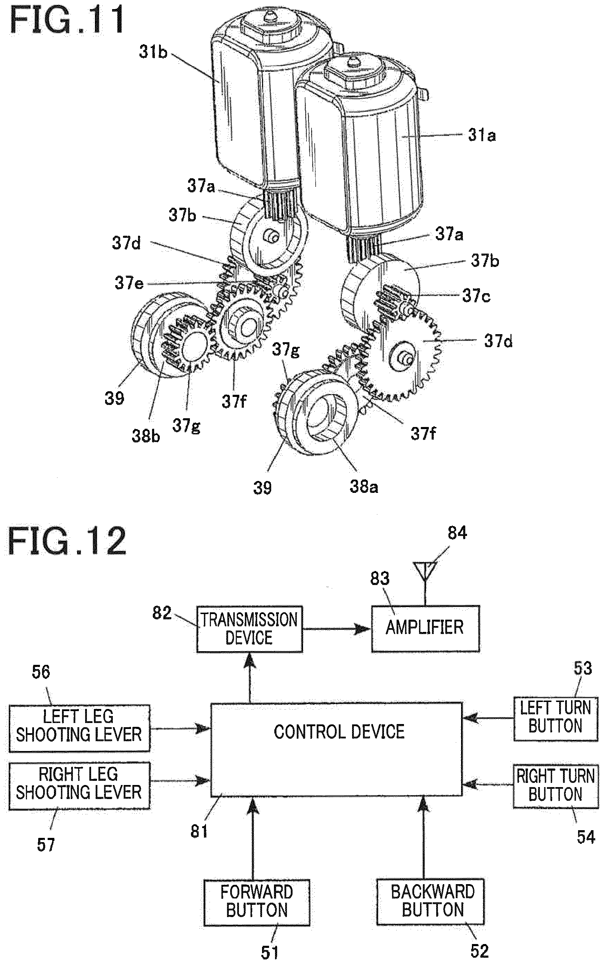

As shown in FIG. 11, the motor 31a (or motor 31b) is provided upright, and a gear 37a is provided to the output axis of the motor 31a (or motor 31b). The power of the gear 37a is transmitted to a wheel 38a (or wheel 38b) via gears 37b, 37c, 37d, 37e, 37f and 37g. A rubber ring 39 is mounted on the outer circumference of the wheel 38a (or wheel 38b). There is provided each pair of left and right gears 37a, 37b, 37c, 37d, 37e, 37f and 37g.

These sections for rotating the left and right wheels 38a and 38b form a wheel drive device.

### (Control configuration)

Next, the control configuration of the ball hitting device will be described.

As shown in FIG. 12, the external controller 50 includes a control device 81, a forward button 51, a backward button 52, a left turn button 53, a right turn button 54, a left leg shooting lever 56, a right leg shooting lever 57, a transmission device 82 which generates a control signal, an amplifier 83 which amplifies the control signal and an antenna 84 which emits the control signal.

In the external controller 50, when various buttons or levers are operated, the control device 81 transmits a forward signal or the like to the transmission device 82, the transmission device 82 which received the signal generates a predetermined control signal corresponding to the received signal, the amplifier 83 amplifies the control signal and the antenna 84 emits a predetermined control signal toward the device body 10. The control signal is a forward signal, a backward signal, a left turn signal, a right turn signal, a left leg shooting signal and a right leg shooting signal.

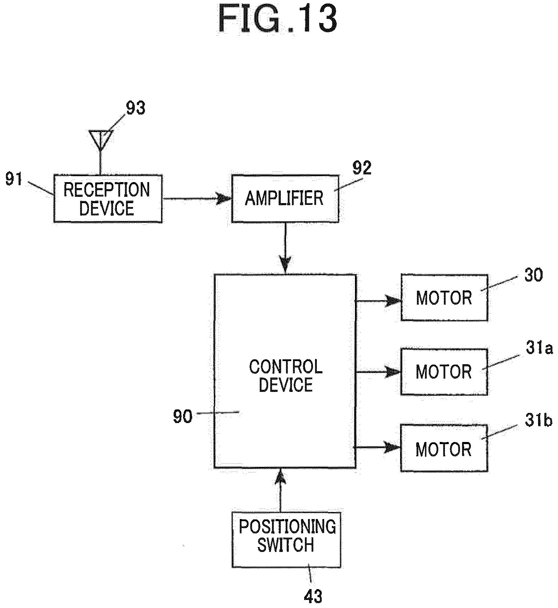

As shown in FIG. 13, the device body 10 includes a control device 90, motors 31a and 31b which are driven by the forward signal, the backward signal, the left turn signal or the right turn signal, a motor 30 which is driven by the left leg shooting signal or the right leg shooting signal, the positioning switch 43, a reception device 91, an amplifier 92 and an antenna 93.

The reception device 91 receives the control signal, which was emitted from the external controller 50, via the antennal 93 and the reception device 91, and transmits the signal to the amplifier 92. The amplifier 92 amplifies the signal and transmits the amplified signal to the control device 90. If the received signal is the forward signal, the backward signal, the left turn signal or the right turn signal, the control device 90 appropriately controls the motors 31a and 31b on the basis of the signal transmitted from the amplifier 92.

If the received signal is the left leg shooting signal or the right leg shooting signal, the control device 90 controls to cause the motor 30 to rotate forward or backward on the basis of the signal transmitted from the amplifier 92.

### (How to play)

A plurality of players separates into friends and foes, and each of them has a single external controller 50 to operate the corresponding device body 10. For example, a goal post is placed, time is set and the players play to compete for a total score.

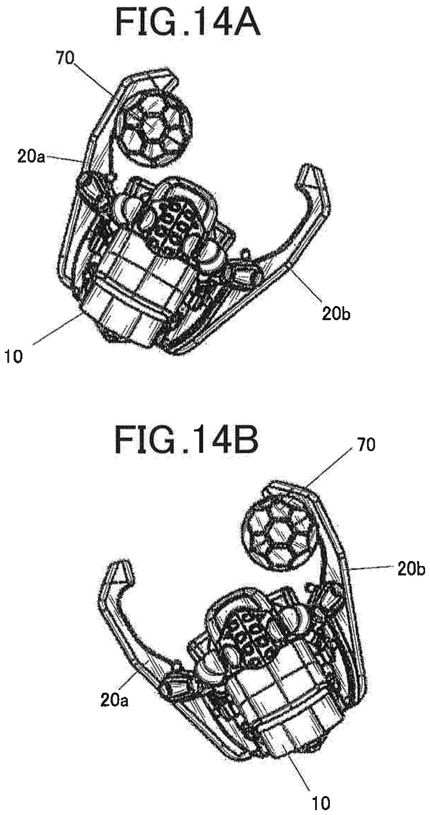

As shown in FIG. 14A, when the device body 10 holding the ball 70 with the ball holding pieces 20a and 20b is turned to the right, the ball 70 abuts on the left ball holding piece 20a, and the device body 10 turns to the right while holding the ball 70. On the other hand, as shown in FIG. 14B, when the device body 10 holding the ball 70 with the ball holding pieces 20a and 20b is turned to the left, the ball 70 abuts on the right ball holding piece 20b, and the device body 10 turns to the left while holding the ball 70. Thus, it is possible to prevent the ball 70 from being taken off by the device body 10 of the opponent.

When the device body 10 moves forward while alternately turning to the left and right, the ball 70 is held while freely moving between the left and right ball holding pieces 20a and 20b. Thus, it is possible to create an image as if the device body 10 was moving forward with dribbling.

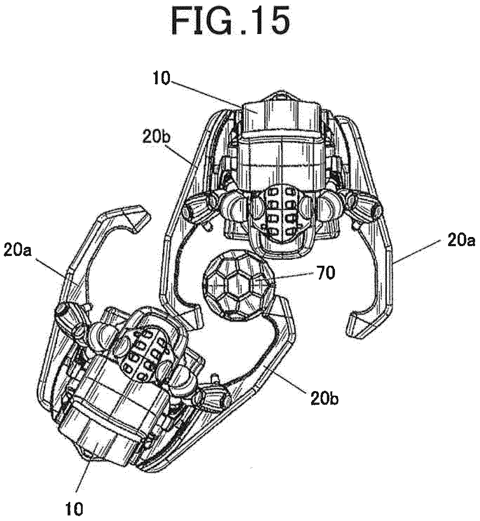

As shown in FIG. 15, when the device body 10 of the player's opponent is holding the ball 70, the player can take the ball 70 from the device body 10 of the opponent by causing his/her device body 10 to move close to the device body 10 of the opponent and make a turn.

According to one aspect of the present invention, a ball hitting device includes: a ball; a device body which includes a drive device that causes the device body to at least move forward and turn and a hitting device that hits the ball forward; and an external controller which operates the drive device and the hitting device from outside, wherein the device body is provided with ball holding pieces on respective left and right sides of a hitting section of the hitting device, the ball holding pieces extending in front of the device body, and the ball is freely movable between the left and right ball holding pieces.

Thus, since the ball can move freely between the left and right ball holding pieces, it is possible to scramble for the ball even after the ball is held.

Preferably, the device body is a humanoid robot, and the hitting section is a leg.

Thus, since the device body is a humanoid robot and the hitting section is a leg, the players can enjoy a soccer game.

Preferably, each of left and right legs is the hitting section.

Thus, since each of the left and right legs is the hitting section, the play can be varied.

Preferably, a ball shifting member which shifts the ball to left or right is provided between the left and right legs.

Thus, since the ball is shifted to left or right, it is possible to prevent the ball from remaining between the left and right legs and surely lead the ball to either one of the left and right legs. As a result, the ball can be hit quickly.

Preferably, a ball holding section of each of the ball holding pieces is arched so as to be concave on an inner side in a width direction of the device body.

Thus, since the ball holding section of the ball holding piece is arched so as to be concave on an inner side in the width direction of the device body, the ball holding force is higher compared to that of a linear ball holding section.

Preferably, an opening degree between distal ends of the left and right ball holding pieces is adjustable.

Thus, since the opening degree of the distal ends of the left and right ball holding pieces is adjustable, the ball holding force can be adjusted.

Preferably, a height position of a ball holding section of each of the ball holding pieces is adjustable.

Thus, since the height position of the ball holding section of each of the ball holding pieces is adjustable, the ball holding force can be adjusted.

## Claims

1. A ball hitting device, comprising:
a ball;
a device body which includes a drive device that causes the device body to at least move forward and turn and a hitting device that hits the ball forward; and
an external controller which operates the drive device and the hitting device from outside, wherein
the device body is provided with ball holding pieces on respective left and right sides of a hitting section of the hitting device, the ball holding pieces extending in front of the device body, and
the ball is freely movable between the left and right ball holding pieces.

2. The ball hitting device according to claim 1, wherein the device body is a humanoid robot, and the hitting section is a leg.

3. The ball hitting device according to claim 2, wherein each of left and right legs is the hitting section.

4. The ball hitting device according to claim 3, wherein a ball shifting member which shifts the ball to left or right is provided between the left and right legs.

5. The ball hitting device according to any one of claims 1 to 4, wherein a ball holding section of each of the ball holding pieces is arched so as to be concave on an inner side in a width direction of the device body.

6. The ball hitting device according to claim 5, wherein an opening degree between distal ends of the left and right ball holding pieces is adjustable.

7. The ball hitting device according to any one of claims 1 to 6, wherein a height position of a ball holding section of each of the ball holding pieces is adjustable.
